# EUROPEAN PATENT SPECIFICATION

(11) **EP 3 660 306 B1**
(45) Date of publication and mention of the grant of the patent: **07.07.2021**
(21) Application number: 20150765.4
(22) Date of filing: 27.11.2017
(51) Int. Cl.: F04B 35/04, F04B 49/06, F04B 53/10, B60N 2/90, B60N 2/66

(54) **INTEGRATED PUMP VALVE DEVICE FOR PROVIDING PRESSURIZED AIR**
INTEGRIERTE PUMPENVENTILVORRICHTUNG ZUR BEREITSTELLUNG VON DRUCKLUFT
DISPOSITIF DE SOUPAPE DE POMPE INTÉGRÉ DESTINÉ À FOURNIR DE L'AIR SOUS PRESSION

(43) Date of publication of application: 03.06.2020
(62) Divisional of application: 17203827.5
(73) Proprietor: FICO CABLES LDA, 4470-263 Vermoim-Maia (PT)
(72) Inventor: DE CASTRO FARIA, Manuel António, 4470-263 Vermoim-Maia (PT); LOPES, Pedro, 4470-263 Vermoim-Maia (PT)
(74) Representative: Wunsch, Alexander

(56) References cited:
- US-A- 5 713 724
- US-A- 5 975 629
- US-A1- 2003 227 760
- US-A1- 2011 217 191
- US-A1- 2011 227 388
- US-B2- 7 287 842

## Description

### 1. Field of the invention

The present invention relates to an integrated pump valve device for providing pressurized air.

### 2. Technical background

Integrated pump valve devices are in general compact devices to electrically generate pressurized air. The pressurized air can for example be used in lumbar supports of a passenger seat in a vehicle or airplane for inflating bladders or chambers inside the seat. By integrated pump valve devices the lumbar supports can be rapidly inflated or deflated for adjusting the cushion of the passenger's seat appropriately in order to provide a comfortable seating experience for the passenger.

The pressurized air is commonly generated by an air pump that is driven by a direct current (DC) motor. A DC motor essentially comprises a rotating shaft and transforms electrical energy into mechanical energy or rotation. This rotation of the shaft is then used to drive the pump and to generate pressurized air.

To this end, the pump is connected to the DC motor at a driving end of the DC motor, i.e. where the rotating shaft extends or protrudes from the DC motor in order to establish a mechanical connection between the DC motor and the pump. The air within the lumbar support bladder is regulated by solenoid valves for maintaining and releasing air. In the prior art such solenoid valves are directly arranged at an air outlet of the pump. For example the document US 2011/ 0227388 A1 describes an adjusting device for a seat comprising a valve assembly, wherein the complete valve assembly is arranged at an air outlet side of the pump.

US 7 287 842 B2 discloses a pressurizing pump device of a printing apparatus. The pressuring pump device comprises an electric DC motor that drives a pump via a gear mechanism. The pump device further comprises an atmospheric release valve that is also driven by the electric motor, when the electric motor is rotated inversely.

US 7 287 842 B2, however, does not disclose that the valve is arranged on a commutator side of the DC motor and that the pump is arranged on a driving side of the motor opposite to the commutator side.

US 2003/0227760 A1 discloses an EMC shield and housing for electronic components on da printed circuit board.

For the electrical connection of the DC motor usually connectors extend or protrude from the DC motor. These connectors are connected inside the DC motor to a commutator for supplying the magnetic coils of the rotor with alternating current that rives the DC motor.

During operation the commutator of the DC motor generates electromagnetic compatibility (EMC) disturbances due its current switching. These EMC disturbances may negatively affect other electrical components of the vehicle. Thus, EMC filtering circuits are attached to the connectors of the DC motor for shielding the following electrical wires from the EMC disturbances. Thus, the radiation of EMC disturbances to other electrical components is avoided.

Therefore, in prior art integrated pump valve devices the electrical connection of DC motor and solenoid valves is done at different locations, what requires a significant wiring effort and leads to a high space consumption.

It is the problem of the present invention to provide an integrated pump valve device that overcomes the above mentioned requirements and constraints.

### 3. Summary of the invention

At least one of the problems is solved by an integrated pump valve device according to claim 1.

The structure of the present integrated pump valve device is favorable, because the valves and the pump are arranged at opposite sides of the DC motor, what provides very compact and space saving structure for the whole integrated pump valve device. Thereby, the EMC filter is arranged very close to the commutator of the DC motor as EMC disturbance source. Further, the valve can be electrically connected via the same PCB board which is used for the EMC filter. This electronic circuity for valve actuation and EMC filter on one common PCB board saves valuable space and resources, and facilitates the installation. No additional electric cable connections along the DC motor to its opposing end, as given in the prior art, are necessary anymore. With the present invention only a fluid connection between the pump and the valve along the DC motor is required, but the fluid connection is much more robust than any electrical cable connections. Furthermore, the fluid connection can be manufactured or installed manually, without the need for any tools.

The fact that the integrated pump valve device of the present invention uses a different topology of components compared to the prior art allows to use lesser components, a better electrical connection only via one common PCB, a more robust and reliable device and saves production costs.

Preferably, the PCB board further comprises a valve supply circuitry. The valve supply circuitry supplies the at least one valve with electrical control signals. Thus, the valve supply circuitry, like diodes, transistors or resistors can also be arranged on the common PCB board.

Preferably, the PCB board further comprises a supply circuitry for the DC motor. Thus, the DC motor supply circuitry, like diodes, transistors or resistors can also be arranged on the common PCB board.

Preferably, the at least one valve is connected to the PCB board by soldering and is arranged at a side of the PCB board opposite to the side facing the motor. Soldering is a simple and effective way to electrically and mechanically connect components with each other. Furthermore, with this structure, all units of the integrated pump valve device are arranged one after the other which is space saving and facilitates the installation and change of single modules. Moreover, the PCB board and the valves can be protected by one single cover.

Preferably, the PCB board comprises connecting means, in particular apertures at solder points, for electrically and mechanically connecting the PCB board directly to electrical contacts of the motor by soldering. Thereby, the apertures fit to the electrical contacts of the motor such that an easy insertion is provided. Furthermore, by using the apertures an alignment of the components with respect to each other is facilitated and a robust mechanical and electrical connection by soldering is established. Preferably, the PCB is mechanically only fixed to the motor via this solder connection of the motor contacts to the PCB. In other embodiments, other fixing means for the PCB board to the DC motor are used.

Preferably, the PCB board comprises connecting means, in particular apertures at solder points, for electrically and mechanically connecting the at least one valve by means of contacts directly to the PCB board by soldering. The plug-in connection between the contacts and the apertures facilitates an easy alignment of the components with respect to each other and further provides a robust mechanical connection. In addition, soldering the components together strengthens this mechanical connection and fixates the arrangement. All in all, in the device of the present invention electrical connections are only required on the PCB at one end of the DC motor, particular the commutator side of the DC motor, what facilitates the manufacturing of the integrated pump valve device.

Preferably, the commutator of the motor is a source of EMC disturbances, and the EMC filtering of the commutator is performed by means of the EMC filtering circuit on the PCB board. The commutator is a known source for EMC disturbances and its radiation characteristics can be determined e.g. by measurements. Thus, an effective shielding can be designed and provided in advance. The arrangement of the EMC filtering device on a PCB board supports the manufacturing in large number of pieces, and furthermore facilitates an easy transportation and installation of the EMC filtering device. The arrangement of the EMC filtering device on a PCB board is furthermore space saving and provides for the arrangement of further devices or circuits in a space saving manner on the same PCB board. Thus, a very compact structure of the integrated pump valve device can be achieved. Further, the PCB board is much more robust compared to a simple electrical cable connection as for example provided in the prior art.

Preferably, the EMC filtering circuit is arranged at a position on the PCB board, close to the commutator of the DC motor. Thereby, the term close may mean a few millimeters or centimeters at the most. The closer the EMC filtering device is arranged to or around the EMC disturbance source, here the commutator, the better it prevents the propagation of EMC disturbances. On the other hand, the larger the distance between the EMC disturbance source and the EMC filtering device is, the larger the size of the EMC filtering device has to be in order to effectively prevent the propagation of the EMC disturbances. Apart from that, the arrangement of the components at close quarters is space saving.

Preferably, at least the valve supply circuitry is arranged on the PCB board further outside than the EMC filtering circuit. Because of the arrangement of the valve supply circuitry further outside the EMC filtering circuit the valve supply circuitry is shielded from EMC disturbances. Furthermore, depending on the extension of the PCB board there is in general, however, enough room for the valve supply circuitry and additional circuits around the EMC filtering circuit such that they can be arranged on the same PCB board. These circuits, the valve supply circuitry and/or additional circuits, can also be added at a later point in time without affecting the EMC filtering circuit already arranged on the PCB board.

Preferably, the pump comprises an outlet socket with an outlet for pressurized air, preferably at a side perpendicular to its connection side with the motor. Because of the sideways arrangement of the outlet socket the pressurized air can be guided easily to the opposite end of the motor where the valves for regulating the flow of pressurized air are located. Furthermore, the outlet socket facilitates the mounting of a connection part for the fluid connection to the valves.

In another embodiment, an air outlet socket of the pump is on the opposite side to the connection side of the motor. Then, the air is guided through an air channel along the DC motor to the at least one valve.

Preferably, the device further comprises at least one check valve, as for example an umbrella valve, in the fluid connection between the pump and the at least one valve. Even more preferably, the at least one umbrella valve is directly connected to the at least one valve. The umbrella valve, in the sense of a one-way valve, prevents an uncontrolled back-flow of pressurized air back out of the bladder of a lumbar support back into the pump when the pump is inactive. Therefore, the umbrella valve maintains the air within the filled bladder and the pump must not be airtight in backflow direction. Because of the arrangement of the umbrella valve directly at the at least one valve, the umbrella valve is perfectly aligned with the adjacent components and may further be fixed to the PCB board in order to provide a robust connection and structure.

Preferably, the at least one umbrella valve is directly or indirectly aligned with the PCB board by a corresponding recess in the PCB board. The recess facilitates an easy alignment of the umbrella valve during installation. Furthermore, it provides a stop face for the installed umbrella valve to prevent a horizontal shifting. Thereby, the whole structure of the integrated pump valve device is more robust.

Preferably, the fluid connection is further established by means of a hose, for providing pressurized air from the pump, along the DC motor to the at least one valve. Thereby, preferably, the hose is mounted on and pinched between an outlet socket of the pump and an inlet socket of a further connected component in the fluid connection. Such a hose is commonly made of a flexible, elastic but thick plastic material and is, thus, extremely resistant against mechanical impacts like shocks for example. Thus, the fluid connection is much more robust than e.g. the electrical cable connection of the prior art. Furthermore, such a hose connection can be installed by hand without using any tools.

Preferably, the at least one valve is a solenoid valve. Such a solenoid valve enables a reliable control of the flow of pressurized air therethrough. Thereby, in particular the inflation and release of compressed air into and from a lumbar support can be controlled effectively. The solenoid valves usually have a neutral position in which an air outlet opening of the valve is blocked and airtight, in order to maintain the air pressure in the attached bladder without requiring electrical energy. Solenoid valves are standard components and can be produced or purchased at low costs, so that the overall costs of the integrated pump valve device can be minimized.

Preferably, the device further comprises at least one over pressure valve. Even more preferably, the at least one over pressure valve is directly connected to the valve at an outlet side of the valve. Such an over pressure valve protects the valve and a connected lumbar support bladder against any over pressure in the lumbar support, e.g. due to a too long filling time or due to environmental pressure differences, when driving down a mountain, or the like. In particular, the over pressure valve enables an automatic reduction of the occurring over pressure in bladders or chambers of the lumbar support. Preferably, the over pressure valve may be as an example an over pressure spring valve comprising a passive spring activated valve without any external control means.

Preferably, the integrated pump valve device comprises two valves and/or two umbrella valves and/or two over pressure spring valves. Therefore, two bladders of a seat or a lumbar support can be filled and released independently with compressed air.

Preferably, the device further comprises an air division part for distribution the flow of pressurized air between at least two flow paths to the two valves. Preferably, each flow path leads from the inlet socket of the air division part via one umbrella valve, a connected valve and a connected over pressure spring valve to one of the connection tubes and up to the lumbar support. These two paths enable the inflation of two bladders or chambers of the lumbar support independently and at the same time.

Preferably, the device further comprises a metal cap for connecting the PCB board to the DC motor, wherein the metal cap is further acting as an EMC shield of the DC motor at the commutator side. Thus, on the one hand, the metal cap serves for the mechanical connection of the PCB board to the DC motor, which is more stable than just connecting the PCB board to the DC motor by the soldered motor terminals. On the other hand, the metal cap serves for EMC shielding purposes. It provides the electrical connection between the metal housing of the DC motor with the PCB board and further acts as EMC shield itself, as it surrounds the electric terminals and the commutator side of the DC motor. Thus, EMC radiation is further effectively reduced.

Preferably, a cover is arranged above the PCB board covering the electronic circuits on the PCB board and the valves. Preferably, the cover protects both the at least one circuit for EMC filtering and the at least one valve supply circuitry. The cover protects the devices below against environmental conditions, e.g. humidity or dust. Furthermore, the cover mechanically protects the PCB board and the different valves against unwanted mechanical strain or impacts, during mounting of the integrated pump valve device. Further, the cover is easy to install, preferably by means of screws for a releasable connection. Finally, only one single cover is needed for both circuits of the PCB board, respectively, which leads to a compact structure of the whole integrated pump valve device as well as material savings.

### 4. Brief description of the drawings

In the following, preferred embodiments of the invention are disclosed by reference to the accompanying figures, in which shows:
- Fig. 1:: a schematic illustration in an exploded view of an embodiment of the integrated pump valve device according to the present invention;
- Fig. 2:: a schematic illustration in a perspective view of the embodiment of Fig. 1, in assembled condition;
- Fig. 3:: a side view of the embodiment of the integrated pump valve device of Fig. 2;
- Fig. 4:: a perspective view of the embodiment of Fig. 2, wherein the hose is removed and the cover is set aside for showing the internal components;
- Fig. 5:: a top view of an embodiment of a PCB board of the integrated pump valve device according Fig. 2;
- Fig. 6A and 6B:: two sectional side views of a valve and the over pressure spring valve in closed and open position of the integrated pump valve device according Fig. 2;
- Fig. 7:: a schematic view of an exemplary lumbar support system using an embodiment of the integrated pump valve device according to the present invention;
- Fig. 8:: a schematic illustration in an exploded view of a further embodiment of the integrated pump valve device according to the present invention;
- Fig. 9:: a further embodiment of the integrated pump valve device according to the present invention; and
- Fig. 10:: a schematic illustration in an exploded view of the embodiment of Fig. 9.

### 5. Detailed description of embodiments of the invention

In the following, preferred embodiments of the invention are described in detail with respect to the figures. In the various embodiments structurally similar elements are designated by the same reference number. Features of one embodiment may be combined with features of other embodiments, even this may not explicitly be described.

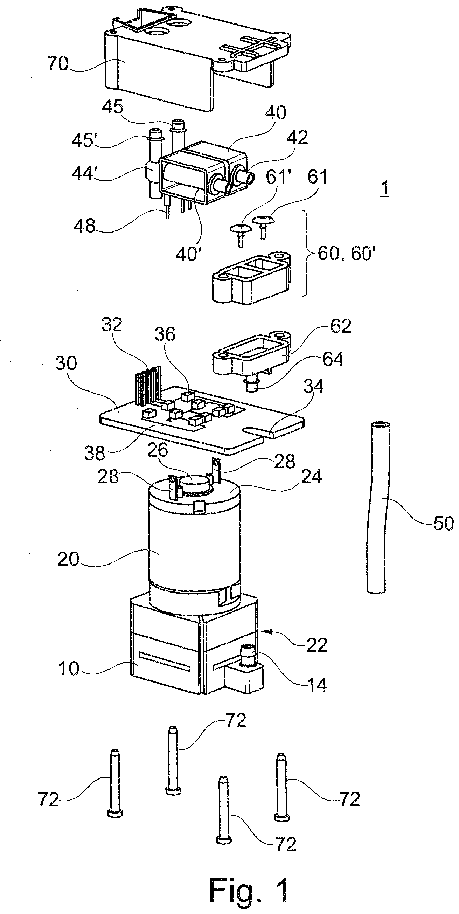

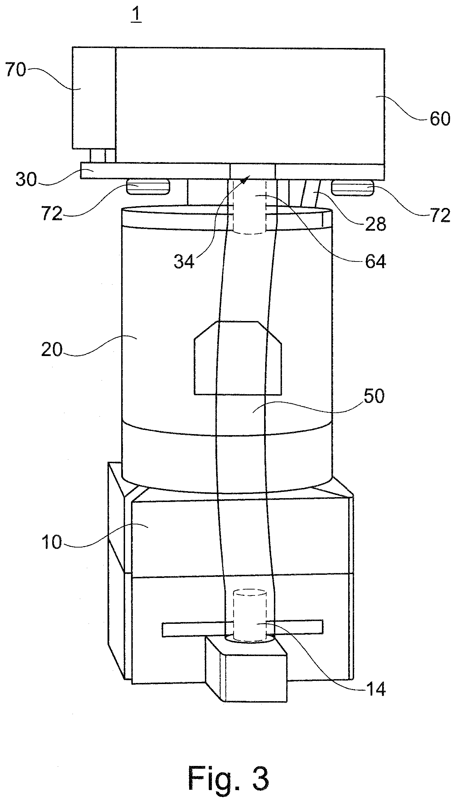

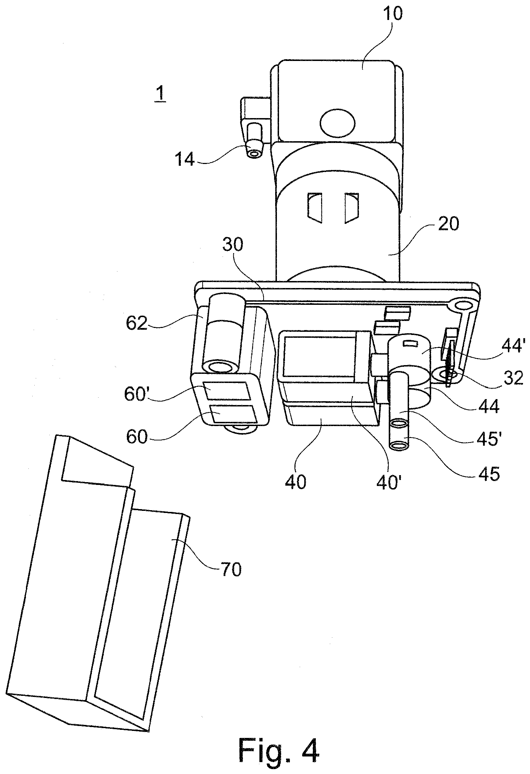

Figs. 1 to 4 show a first embodiment of the integrated pump valve device 1 of the present invention. The integrated pump valve device 1 comprises an air pump 10 driven by a DC motor 20, a PCB board 30, a hose 50, an air division part 62, two umbrella valves 60, 60', two solenoid valves 40, 40' and a cover 70. The cover 70, the air division part 62 and the PCB board 30 are connected to each other by means of screws 72.

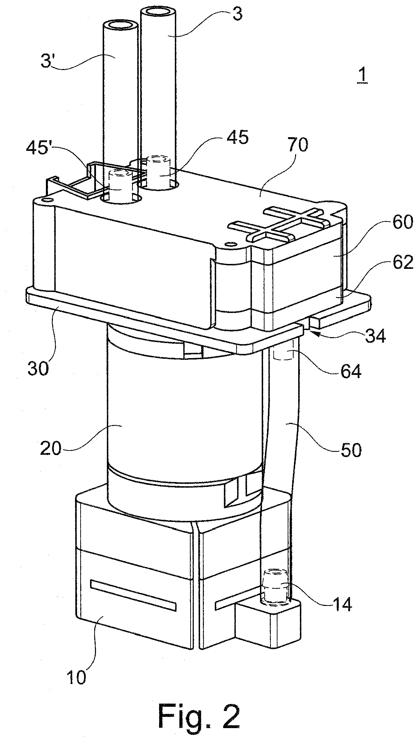

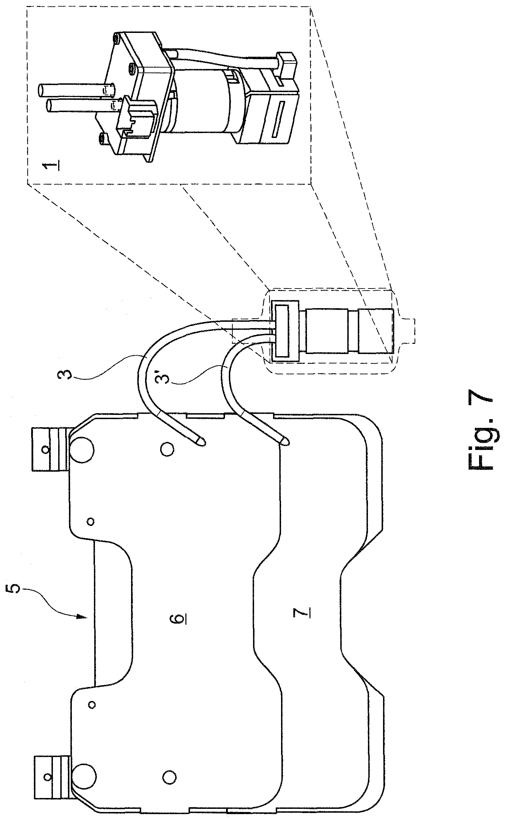

As it can be seen in Fig. 2, the hose 50 connects air pump 10 with the air division part 62. Further, two connecting tubes 3, 3' connect the integrated pump valve device 1 with two corresponding chambers or bladders 6, 7, preferably of a lumbar support 5 (see Fig. 7). The hose 50 may simply be pinched between outlet socket 14 and inlet socket 64 in order to establish a durable connection. By means of integrated pump valve device 1 the chambers 6, 7 can be filled with compressed air and released from compressed air for adjusting the seat's shape according to the passenger's needs.

As it can be seen in Fig. 2 the structure of the present integrated pump valve device 1 is favorable, because the valves 40, 40' and the pump 10 are arranged at opposite sides of the DC motor 20, what provides very compact and space saving structure for the whole integrated pump valve device, since all electronics can be integrated on one common PCB board 30. Thereby, the EMC filter on the PCB board 30 is arranged very close to the commutator 26 of the DC motor 20 and the PCB board can be mounted directly to the contacts 28 of the DC motor 20 by soldering. The different topology of the integrated pump valve device 1 of the present invention allows to use lesser components, a better electrical connection only via one common PCB, a more robust and reliable device and saves production costs. Preferably, this embodiment of integrated pump valve device 1 comprises approximately a height of 93 mm, a width of 33 mm and a length of 58 mm, only.

The DC motor 20 is a common small electrical motor that drives the air pump 10 by a driving shaft at the driving side 22 of the DC motor 20. Opposite to the driving side 22 the DC motor 20 comprises a commutator 26 for alternating the supplied DC current. At the commutator side 24 of DC motor 20 there are electrical contacts 28 protruding out of the housing for the electrically connection of the DC motor.

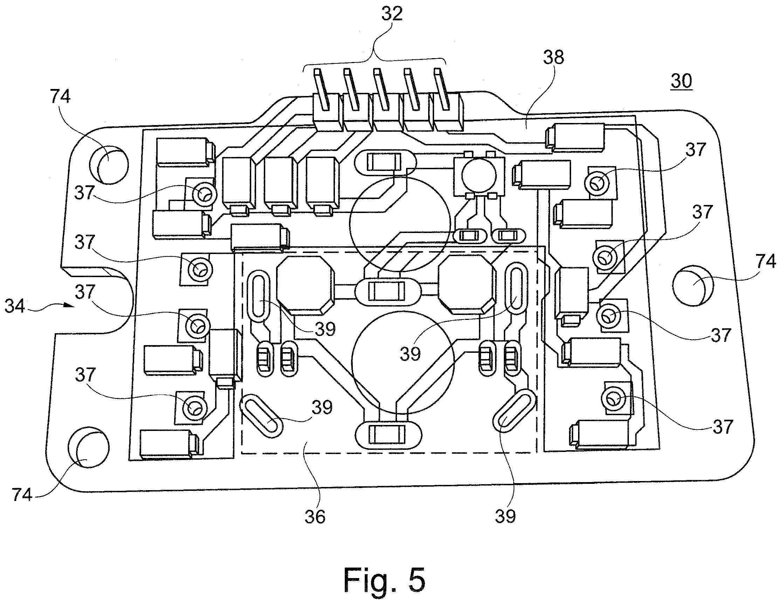

The contacts 28 protrude through holes within the PCB board 30 and are soldered to soldering points of the PCB board 30. Thus, the PCB board 30 is arranged at the commutator side 24 of DC motor 20. The PCB board 30 as shown in detail in Fig. 5 comprises at least an EMC filtering circuit 36 and valve supply circuitry 38. Therefore, the EMC filtering circuit 36 is arranged on the PCB board 30 favorably very close to the commutator 26, in order to effectively shield all other electrical devices or circuits from the EMC disturbances generated by the commutator 26. By this arrangement the length of the electrical lines between the commutator 26 and the EMC filtering circuit 36 are minimized, what provides a minimized EMC radiation.

Fig. 5 shows a top planar view of a PCB board 30 used in an integrated pump valve device 1. The PCB board 30 comprises at least two circuits, EMC filtering circuit 36 (framed by the dotted line) located at the center of the board, and valve supply circuitry 38 (framed by the solid line) located around EMC filtering circuit 36.

The EMC filtering circuit 36 mainly comprises capacitors and coils to eliminate the EMC disturbances caused by the commutator 26. To this end, the EMC filtering circuit 36 comprises apertures 39 through which the electrical contacts 28 of the DC motor 20 can be inserted. In an installed state, with the electrical contacts 28 inserted through the apertures 39, the commutator 26 of the DC motor 20 is directly positioned on the opposite side of the EMC filtering circuit 36 on the PCB board 30, i.e. in Fig. 5 at the bottom side of the PCB board 30. As a result, the EMC filtering circuit 36 is arranged very close to the commutator 26 being the source of the EMC disturbances. Thus, the EMC filtering circuit 36 can provide an effective shielding for all other electronic components arranged on the PCB board 30.

The valve supply circuitry 38 comprises diodes for current control. Preferably the valve supply circuitry 38 is arranged at the circumferences of the EMC filtering circuit 36. Apart from the apertures 39 that are located at the center of the PCB board 30, there are furthermore apertures 37 located at the outer periphery of the PCB board 30 acting as solder points for contacts 48 of the valves 40, 40'. The contacts 48 of the valves 40, 40' are inserted into the respective apertures 37 and are connected to the solder points by soldering. Due to this arrangement, in the installed state, the contacts 48 are in the direct vicinity to the valve supply circuitry 38. This has the advantage, that the signal lines between the valve supply circuitry 38 and the corresponding valve 40, 40' are as short as possible in order provide a very compact integrated pump valve device 1**.**

The PCB board 30 as well as all the components being in electrical contact with the PCB board 30, e.g. the DC motor 20 and the valve 40, 40', can be supplied with electrical energy from an external power source via the power supply connection 32. At the circumference of the PCB board 30 there are larger apertures 74 for inserting through the screws 72 in order to fix the cover 70 to the PCB board 30. The number of apertures 74 and used screws 72, respectively, may vary in different embodiments of the present invention.

The PCB board 30 comprising both circuits 36 and 38 and the connection to the two solenoid valves 40, 40' and the DC motor 20, arranged on one side of DC motor 20 only, thus, facilitating manufacturing of the integrated pump valve device 1**.**

Further, PCB board 30 comprises a recess 34 for receiving the inlet socket 64 of air division part 62 shown in Fig. 1 and 2. The recess 34 facilitates the alignment of the air division part 62 with the PCB board 30 and acts as a stop face to prevent horizontal shifting of the air division part 62. In a further embodiment of the present invention this recess might also be used as a mounting point for clipping the air division part 62 to the PCB board 30 provided that the recess 34 and the inlet socket 64 comprise the necessary elements for clipping.

Furthermore, inlet socket 64 of air division part 62 is provided for receiving pressurized air generated by pump 10. The air is passed via an outlet socket 14 of pump 10, via hose 50 to inlet socket 64. Thereby, hose 50 can be any suitable fluid connection e.g. a plastic hose.

By the air division part 62 the stream of pressurized air is divided into two or more flow paths passing the pressurized air into one of check valves, in the embodiment, umbrella valves 60 and 60'. The umbrella valves 60, 60' prevent a back-flow of pressurized air into pump 10 and maintain in such a way the air in chambers or bladders 6, 7. The umbrella valves 60 and 60' mainly comprise a housing that serves as a socket for a movable or flexible umbrella shaped valve element 61, 61' as it can be seen in Fig. 1**.** Such an umbrella valve 60, 60' is particularly favorable for as one-way valve for low pressure applications as it does not provide much resistance to the air flowing through and securely tightens the air in blocking direction.

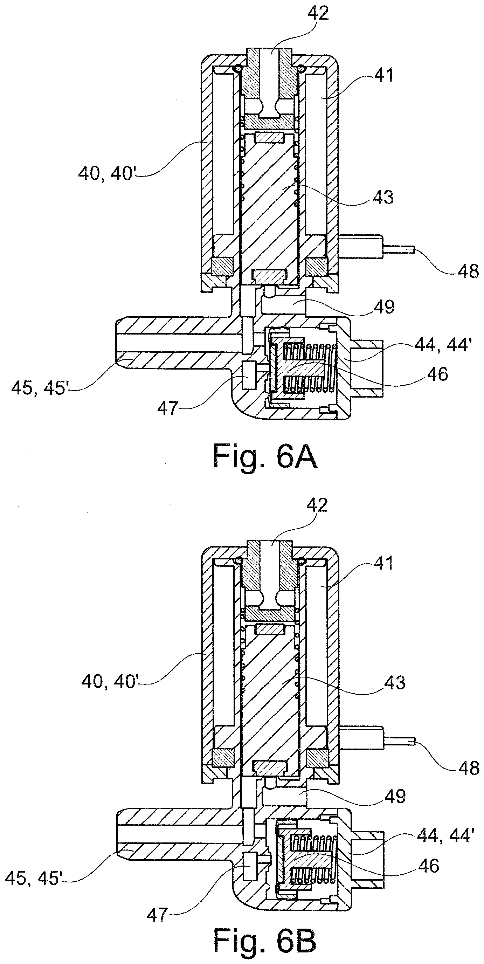

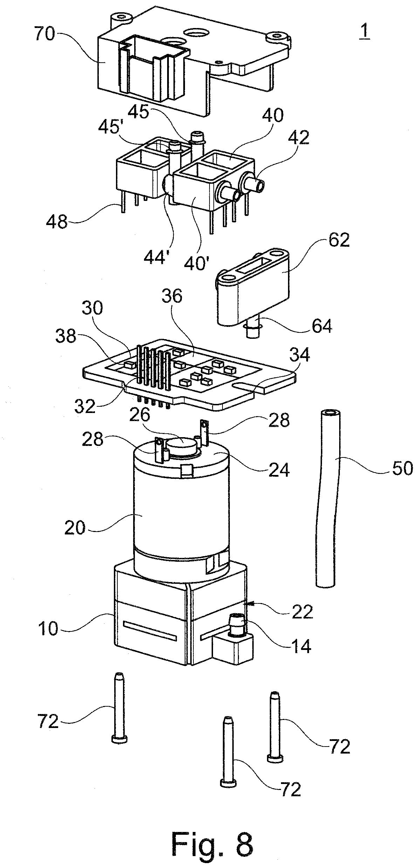

Each umbrella valve 60, 60' is fluidly connected to a corresponding solenoid valve 40, 40'. In the embodiment of Fig. 1-4 the solenoid valve 40, 40' is an electromagnetic activated 3/2-way valve as shown in detail in Figs. 6A and 6B. As an alternative other solenoid valves like a 3/3-way valve can be used as shown in the further embodiment of Fig. 8.

Integrated into the solenoid valve 40, 40' is an over pressure valve, which in the shown embodiment is an over pressure spring valve 44, 44'. The over pressure spring valve 44, 44' is arranged at the outlet side of valve 40, 40' and has a connection 45, 45' to the chambers or bladders 6, 7. Fig. 6A shows the over pressure spring valve 44, 44' in the closed condition, where the valve piston 46 is pressed to the left side by a helical spring. In this condition the air pressure onto the left side of the valve piston 46 is lower than the force of the helical spring, such that the valve piston 46 prevents air flowing out of the over pressure opening 47. Fig. 6B shows the over pressure spring valve 44, 44' in the open condition, where the valve piston 46 is pressed by the air pressure to the right side against the force of the helical spring. In this condition the air pressure onto the left side of the valve piston 46 is higher than the force of the helical spring, such that the valve piston 46 opens the over pressure opening 47 and air from inside of the respective bladder 6,7 is vented into ambiance. This prevents an over-pressure inside the bladders 6, 7 of the lumbar support.

Figures 6A and 6B further show the details of solenoid valve 40, 40'. Each valve 40 and 40' comprises an inlet 42, an electromagnetic coil 41 having electric contacts 48, a valve plunger 43, a connection 45 to the device to be actuated, like the bladders 6, 7 and an outlet 49 to the ambiance. The electromagnetic coil 41 can move the valve plunger 43 back and forth, in Fig. 6A and 6B from down to up, for the valve switching task.

For filling a bladder 6, 7 the DC motor 20 is running and the air pump 10 is pumping compressed air, through the hose 50 into the air division part 62, which guides the air through the umbrella valves 60, 60'. From the umbrella valves 60, 60' the air enters the respective solenoid valve 40, 40' via inlet 42. In the neutral filling state as shown in Fig. 6 the air can flow from the inlet 42, through the valve, along the over pressure spring valve 44, 44', to the connection 45. From the connection 45 the air is flowing through the connecting tubes 3, 3' to the respective bladder 6 or 7 of the exemplary lumbar support 5. In this filling state the electromagnetic coil 41 of the solenoid valve 40, 40' is not activated and, thus, the valve plunger 43 is in the neutral, down position as shown in Figures 6A and 6B. Simultaneously the outlet 49 to ambiance is closed.

After the bladder 6, 7 is filled to the desired amount, the DC motor 20 is stopped and the umbrella valves 60, 60' maintain the air within the respective bladder 6, 7. The electromagnetic coil 41 of the solenoid valve 40, 40' is again not activated.
If the user desired to release air from the respective bladder 6, 7 the electromagnetic coil 41 of the solenoid valve 40, 40' is activated. Thus, the valve plunger 43 is moved to the activated upper position and opens the outlet 49 to ambiance. Thus, the air from the respective bladder 6, 7 flows through connection 45 and outlet 49 into ambiance.

Solenoid valve 40, 40' is mounted to the PCB board 30 essentially by means of its electrical connectors 48. To this end, the connectors are inserted through corresponding apertures 37 in the PCB board 30 and are soldered in order to establish a rigid mechanical and electrical connection. The solder points at apertures 37 on the PCB board 30 are electrically connected to the valve supply circuitry 38 on the PCB board 30 such that the valves 40, 40' can be electrically controlled by the valve supply circuitry 38. The valve supply circuitry 38 may receive instructions from a control device (not shown) or from an executable program e.g. stored on a connected memory (not shown).

Apart from normal operation, there might occur the case where an over pressure is arising in the bladders 5, 6 of lumbar support 5. Such a case may occur for example when the lumbar support 5 is inflated in a region with a higher atmospheric pressure, e.g. at sea level and is then moved towards a low atmospheric pressure area as e.g. in a mountain region. Because of the significant pressure difference between both locations an unwanted over pressure may arise in the lumbar support 5. As a result, the over pressure might lead to a bursting of the lumbar support 5, in particular its bladders or chambers, and hence it has to be avoided. In the present invention, however, the over-pressurized air can be released automatically in a controlled manner by means of over pressure spring valve 44, 44' through over pressure opening 47 into ambiance.

The PCB board 30 with its electronic components and all components mounted thereon, like the solenoid valves 40, 40', the umbrella valves 60, 60' and the over pressure spring valves 44, 44' are covered and protected by cover 70. The cover 70 is generally made of plastic and helps to keeps at least dust and humidity away from the components inside and protects the components against any unwanted impacts that might damage them. Furthermore, the cover 70 comprises apertures for inserting through connecting tubes 3,3' and comprises internal threads such that the cover 70 can be screwed together by means of screws 72 with umbrella valve 60, 60' and the PCB board 30 to form a solid but releasable structure.

The DC motor 20 preferably comprises a metallic housing in order to further shield any sources of EMC disturbances and to dissipate heat to the ambiance. The casing of the pump 10, the umbrella valve 60, 60' and the cover 70 is made of suitable injection molded plastic material. The outlet socket 14 is preferably formed as an integral part of the casing of pump 10.

Fig. 8 shows a second preferred embodiment of the integrated pump valve device 1 according to the present invention. In operation, this second embodiment 1 works in principle like the first embodiment 1 described above. The second embodiment 1, however, has two structural differences. At first, solenoid valve 40, 40' is now a 3/3-way valve, i.e. it comprises three openings and three operation states of the valve 40, 40'. In a first filling state, the respective solenoid valve 40, 40' is open and allows the pressurized air to pass from the air pump 10, through the solenoid valve 40, 40' into one of the bladders 6, 7 of lumbar support 5. In a second neutral state the solenoid valve 40, 40' is closed for maintaining the air within the respective bladder 6, 7. Thus, contrary to the first embodiment the solenoid valve 40, 40' can block the air coming from the bladders 6, 7 of the lumbar support 5 such that one-way valves like the umbrella valves 60, 60' are not necessary. In a third release state of the solenoid valve 40, 40' the outlet 49 to ambiance is opened for releasing air from the respective bladder 6, 7 into ambiance.

The use of two 3/3-way solenoid valves 40, 40' may lead to slight changes in the design of the other components. A larger air division part 62 is provided compared to the one of the embodiment 1. Cover 70 is fixed to the PCB board 130 by using three screws 72 instead of four, such that also the number of apertures for the screws 72 in the PCB board 30 is reduced.

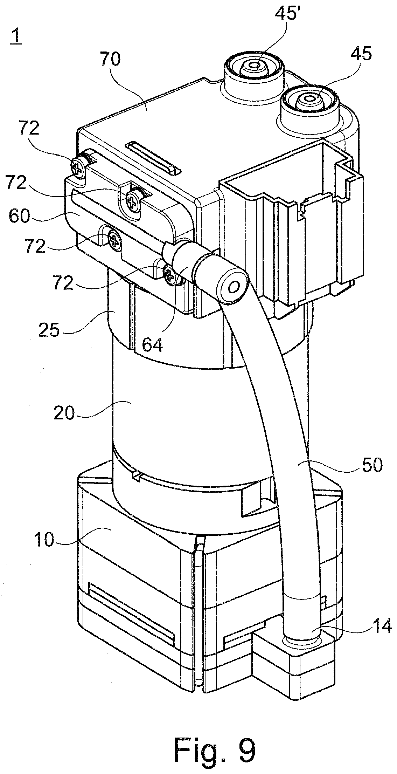

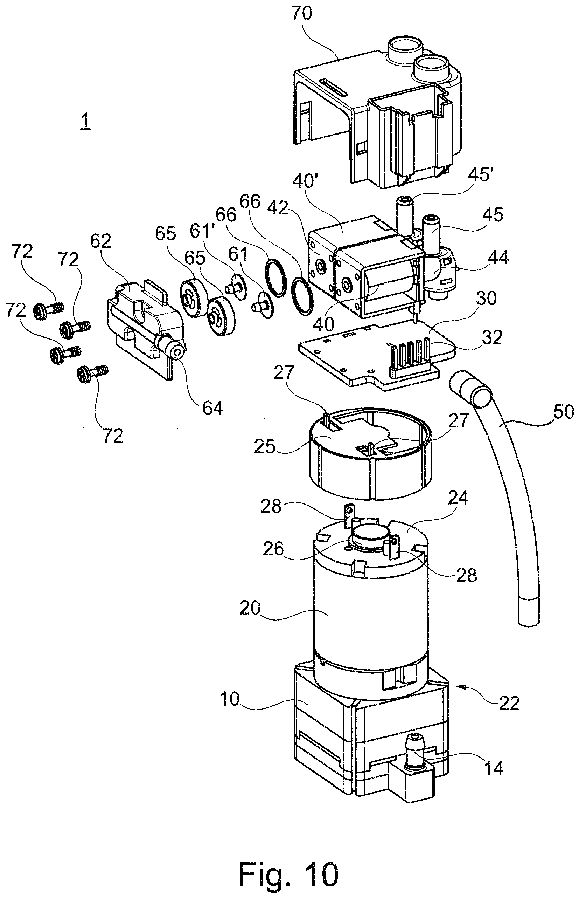

Figures 9 and 10 show a third preferred embodiment of an integrated pump valve device 1. This embodiment has a further reduced size, a further improved mechanical stability and a further improved EMC filtering behavior compared to the previous embodiments. Preferably, this embodiment of integrated pump valve device 1 comprises approximately a height of 93 mm, a width of 42 mm and a length of 42 mm, only.

This embodiment further comprises a metal cap 25 which acts as EMC shield. The metal cap 25 is pressed on the DC motor 20 at the commutator side 24 and electrically contacts the metal housing of the DC motor 20. On the other side of the metal cap 25 it contacts the underside of the PCB board 30 and is fixed to the PCB board. Thus, the metal cap 25 improves the stability of the connection between motor 20 and PCB board 30 and the overall stability of the integrated pump valve device 1**.** Preferably, the metal cap 25 comprises terminals 27 for a soldering connection to the PCB board 30. By means of these terminals also an electric connection between the metal housing of the DC motor 20 and the PCB board 30 is established.

Further, the third embodiment comprises a space saving design of the valve 40, 40', check valve 61, 61' and air division part 62 sub-assembly. As it can be seen in Fig. 10 the air division part 62 is arranged in line with two umbrella valve holders 65, two umbrella check valves 61, 61' and two seals 66 in form of O-rings. The valves holders 65 are arranged in line with the inlet 42 end of the solenoid valves 40, 40'. This sub-assembly is held together by four screws 72. Thus, a very space saving arrangement is arranged.

Preferably the inlet socket 64 of the air division part 62 is arranged to the perpendicular to the mounting direction of the air division part. This also reduces the width of the overall integrated pump valve device 1.

### List of reference signs

- 1: integrated pump valve device
- 3,3': connecting tubes
- 5: lumbar support
- 6,7: chambers or bladders
- 10: air pump
- 14: outlet socket
- 20: DC motor
- 22: driving side of DC motor 20
- 24: commutator side of DC motor 20
- 25: metal cap
- 26: commutator
- 27: terminals
- 28: motor connectors
- 30: PCB board
- 32: power supply connection
- 34: recess
- 36: EMC filtering circuit
- 37: apertures for valve connectors 48
- 38: valve supply circuitry
- 39: apertures for motor connectors 28
- 40, 40': solenoid valve
- 41: solenoid coil
- 42: inlet of valve
- 43: valve plunger
- 44, 44': over pressure spring valve
- 45: connection to lumbar support
- 46: over pressure valve piston
- 47: over pressure opening
- 48: electrical connectors
- 49: air outlet opening
- 50: hose
- 60, 60': umbrella valve
- 61, 61': umbrella shaped valve element
- 62: air division part
- 64: inlet socket
- 65: valve holder
- 66: seal
- 70: cover
- 72: screws
- 74: apertures for screws 72

## Claims

1. Integrated pump valve device (1) for providing pressurized air, comprising:
a. a DC motor (20) having a driving side (22) and a commutator side (24) opposite to the driving side (22);
b. a pump (10) driven by the DC motor (20) for providing pressurized air;
c. at least one valve (40, 40') for controlling the flow of the pressurized air, the at least one valve (40, 40') being in fluid connection with the pump (10); wherein
d. the at least one valve (40, 40') is arranged on the commutator side (24) of the DC motor (20) and the pump (10) is arranged on the opposite driving side (22) of the DC motor (20).

2. Device according to claim 1, comprising two valves (40, 40'), wherein the two valves (40, 40') are arranged on the same commutator side (24) of the DC motor (20).

3. Device according to claim 2, further comprising an air division part (62) for distributing the flow of pressurized air between at least two flow paths to the two valves (40,40').

4. Device according to one of the claims 1 - 3, further comprising at least one check valve (60, 60') in the fluid connection between the pump (10) and the at least one valve (40, 40').

5. Device according to one of the claims 1 - 4, further comprising at least one over pressure valve (44, 44').

6. Device according to one of the claims 1 - 5, wherein the at least one valve (40, 40') is a solenoid valve.

7. Device according to one of the claims 1 - 6, wherein the fluid connection is further established by means of a hose (50), for providing pressurized air from the pump (10, 110), along the DC motor (20) to the at least one valve (40, 40').

8. Device according to one of the claims 1 - 7, further comprising a metal cap (25) for connecting a PCB board (30) to the DC motor (20), wherein the metal cap (25) is further acting as an EMC shield of the DC motor (20) at a commutator side (24) thereof.

9. Device according to one of the claims 1 - 8, further comprising a PCB board (30), wherein the at least one valve (40, 40') is mounted on the PCB board (30).

10. Device according to claim 9, wherein the PCB board (30) comprises motor supply circuitry and/or valve supply circuitry (38) and/or an EMC filtering circuit (36).

11. Device according to one of the claims 9 or 10, wherein the DC motor (20) comprise a commutator (26) arranged at the commutator side (24), wherein the PCB board (30) is electrically and mechanically connected to the motor (20) at the commutator side (24).

12. Device according to one of the claims 9 - 11, wherein the at least one valve (40, 40') is electrically and mechanically directly connected to the PCB board (30).

13. Device according to one of the claims 9 - 12, wherein the at least one valve (40, 40') is connected to the PCB board (30) by soldering and is arranged at a side of the PCB board (30) opposite to the side facing the motor (20).

14. Device according to one of the claims 9 - 13, wherein the PCB board (30) comprises connecting means, in particular apertures (39) at solder points, for electrically and mechanically connecting the PCB board (30) directly to electrical contacts (28) of the motor (20) by soldering.

15. Device according to one of the claims 6 - 14, wherein the the solenoid valve (40, 40') is an electromagnetic activated 3/2-way valve or a 3/3-way valve.

## Patentansprüche

1. Integrierte Pumpenventilvorrichtung (1) zur Bereitstellung von Druckluft, aufweisend:
a. einem Gleichstrommotor (20) mit einer Antriebsseite (22) und einer der Antriebsseite (22) gegenüberliegenden Kommutatorseite (24);
b. eine durch den Gleichstrommotor (20) angetriebene Pumpe (10) zur Bereitstellung von Druckluft;
c. mindestens ein Ventil (40, 40') zum Steuern des Flusses der Druckluft, wobei das mindestens eine Ventil (40, 40') in Fluidverbindung mit der Pumpe (10) steht; wobei
d. das mindestens eine Ventil (40, 40') auf der Kommutatorseite (24) des Gleichstrommotors (20) angeordnet ist und die Pumpe (10) auf der gegenüberliegenden Antriebsseite (22) des Gleichstrommotors (20) angeordnet ist.

2. Vorrichtung nach Anspruch 1, aufweisend zwei Ventile (40, 40'), wobei die beiden Ventile (40, 40') auf der gleichen Kommutatorseite (24) des Gleichstrommotors (20) angeordnet sind.

3. Vorrichtung nach Anspruch 2, weiterhin aufweisend ein Luftaufteilungsteil (62) zum Verteilen des Druckluftstroms zwischen mindestens zwei Strömungswegen zu den beiden Ventilen (40, 40').

4. Vorrichtung nach einem der Ansprüche 1 - 3, weiterhin aufweisend mindestens ein Rückschlagventil (60, 60') in der Fluidverbindung zwischen der Pumpe (10) und dem mindestens einen Ventil (40, 40').

5. Vorrichtung nach einem der Ansprüche 1-4, weiterhin aufweisend mindestens ein Überdruckventil (44, 44').

6. Vorrichtung nach einem der Ansprüche 1-5, wobei das mindestens eine Ventil (40, 40') ein Magnetventil ist.

7. Vorrichtung nach einem der Ansprüche 1-6, wobei die Fluidverbindung weiterhin mittels eines Schlauches (50) hergestellt ist, um Druckluft von der Pumpe (10, 110) entlang des Gleichstrommotors (20) zu dem mindestens einen Ventil (40, 40') zu führen.

8. Vorrichtung nach einem der Ansprüche 1-7, weiterhin aufweisend eine Metallkappe (25) zum Verbinden einer Leiterplatte (30) mit dem Gleichstrommotor (20), wobei die Metallkappe (25) ferner als EMV-Abschirmung des Gleichstrommotors (20) an einer Kommutatorseite (24) desselben wirkt.

9. Vorrichtung nach einem der Ansprüche 1 - 8, weiterhin aufweisend eine Leiterplatte (30), wobei das mindestens eine Ventil (40, 40') auf der Leiterplatte (30) montiert ist.

10. Vorrichtung nach Anspruch 9, wobei die Leiterplatte (30) eine Motorversorgungsschaltung und/oder eine Ventilversorgungsschaltung (38) und/oder eine EMV-Filterschaltung (36) aufweist.

11. Vorrichtung nach einem der Ansprüche 9 oder 10, wobei der Gleichstrommotor (20) einen an der Kommutatorseite (24) angeordneten Kommutator (26) aufweist, wobei die Leiterplatte (30) an der Kommutatorseite (24) elektrisch und mechanisch mit dem Motor (20) verbunden ist.

12. Vorrichtung nach einem der Ansprüche 9 - 11, wobei das mindestens eine Ventil (40, 40') elektrisch und mechanisch direkt mit der Leiterplatte (30) verbunden ist.

13. Vorrichtung nach einem der Ansprüche 9 - 12, wobei das mindestens eine Ventil (40, 40') durch Löten mit der Leiterplatte (30) verbunden ist und an einer Seite der Leiterplatte (30) angeordnet ist, die der dem Motor (20) zugewandten Seite gegenüberliegt.

14. Vorrichtung nach einem der Ansprüche 9 - 13, wobei die Leiterplatte (30) Anschlussmittel aufweist, insbesondere Durchbrüche (39) an Lötstellen, um die Leiterplatte (30) durch Löten direkt mit elektrischen Kontakten (28) des Motors (20) elektrisch und mechanisch zu verbinden.

15. Vorrichtung nach einem der Ansprüche 6 - 14, wobei das Magnetventil (40, 40') ein elektromagnetisch betätigtes 3/2-Wegeventil oder ein 3/3-Wegeventil ist.

## Revendications

1. Un dispositif pompe-soupape intégré (1) pour produire de l'air sous pression, comprenant :
a. un moteur à courant continu (20) avec un côté d'entraînement (22) et un côté de commutateur (24) à l'opposé du côté d'entraînement (22) ;
b. une pompe (10) entraînée par le moteur à courant continu (20) pour produire de l'air sous pression ;
c. au moins une soupape (40, 40') pour le contrôle du débit de l'air sous pression, l'au moins une soupape (40, 40') étant en liaison fluidique avec la pompe (10) ; dans lequel
d. l'au moins une soupape (40, 40') est agencée du côté de commutateur du moteur à courant continu (20), et la pompe (10) est agencée du côté d'entraînement (22) opposé du moteur à courant continu (20).

2. Dispositif selon la revendication 1, comprenant deux soupapes (40, 40'), dans lequel les deux soupapes (40, 40') sont agencée du même côté de commutateur du moteur à courant continu (20).

3. Dispositif selon la revendication 2, comprenant en outre une partie de séparation d'air (62) pour distribuer le débit d'air sous pression entre au moins deux trajets d'écoulement vers les deux soupapes (40, 40').

4. Dispositif selon l'une des revendications 1 à 3, comprenant en outre au moins une soupape anti-retour (60, 60') dans la liaison fluidique entre la pompe (10) et l'au moins une soupape (40, 40').

5. Dispositif selon l'une des revendications 1 à 4, comprenant en outre au moins une soupape de sécurité (44, 44').

6. Dispositif selon l'une des revendications 1 à 5, dans lequel l'au moins une soupape (40, 40') est une électrovanne.

7. Dispositif selon l'une des revendications 1 à 6, dans lequel la liaison fluidique est en outre établie au moyen d'un tuyau (50), pour délivrer l'air sous pression provenant de la pompe (10, 110) en suivant le moteur à courant continu (20) jusqu'à l'au moins une soupape (40, 40').

8. Dispositif selon l'une des revendications 1 à 7, comprenant en outre un capot métallique (25) pour relier une carte PCB (30) au moteur à courant continu (20), le capot métallique (25) jouant en outre le rôle d'un écran CEM pour le moteur à courant continu (20) d'un côté de commutateur (24) de celui-ci.

9. Dispositif selon l'une des revendications 1 à 8, comprenant en outre une carte PCB (30), dans lequel l'au moins une soupape (40, 40') est montée sur la carte PCB (30).

10. Dispositif selon la revendication 9, dans lequel la carte PCB (30) comprend une circuiterie d'alimentation de moteur et/ou une circuiterie d'alimentation de soupape (38) et/ou une circuiterie de filtrage CEM (36).

11. Dispositif selon l'une des revendications 9 ou 10, dans lequel le moteur à courant continu (20) comprend un commutateur (26) agencé du côté de commutateur (24), dans lequel la carte PCB (30) est électriquement et mécaniquement reliée au moteur (20) du côté de commutateur (24).

12. Dispositif selon l'une des revendications 9 à 11, dans lequel l'au moins une soupape (40, 40') est électriquement et mécaniquement reliée directement à la carte PCB (30).

13. Dispositif selon l'une des revendications 9 à 12, dans lequel l'au moins une soupape (40, 40') est reliée par soudure à la carte PCB (30) et est agencée d'un côté de la carte PCB (30) opposé au côté tourné vers le moteur (20).

14. Dispositif selon l'une des revendications 9 à 13, dans lequel la carte PCB (30) comprend des moyens de liaison, en particulier des ouvertures (39) au niveau de points de soudure, pour relier électriquement et mécaniquement la carte PCB (30) directement à des contacts électriques (28) du moteur (20) par soudure.

15. Dispositif selon l'une des revendications 6 à 14, dans lequel l'électrovanne (40, 40') est une vanne 3/2 voies ou une vanne 3/3 voies à activation électromagnétique.
